# FASCICULE DE BREVET EUROPEEN

(11) **EP 2 332 196 B1**
(45) Date de publication et mention de la délivrance du brevet: **24.04.2013**
(21) Numéro de dépôt: 09782407.2
(22) Date de dépôt: 31.08.2009
(51) Int. Cl.: H01M 2/04, H01M 2/12, H01M 10/06

(54) **COUVERCLE POUR BATTERIE**
BATTERIEABDECKUNG
BATTERY COVER

(30) Priorité: 01.09.2008 EP 08163436
(43) Date de publication de la demande: 15.06.2011
(73) Titulaire: Accumalux S.A., 1899 Kockelscheuer (LU)
(72) Inventeur: FLAMENT, Michel, L-5770 Weiler-la-Tour (LU)
(74) Mandataire: Kihn, Pierre Emile Joseph
(86) Numéro de dépôt international: PCT/EP2009/061219
(87) Numéro de publication internationale: WO 2010/023316

(56) Documents cités:
- US-A- 4 463 069

## Description

### Domaine technique

La présente invention concerne un couvercle pour batterie.

### Etat de la technique

Dans la plupart des couvercles pour batteries plomb/acides pour véhicules, les gaz produits à l'intérieur de celles-ci pendant la charge sont évacués par un évent de forme ronde et d'un diamètre de +/- 6mm. Dans certains cas, un tuyau est attaché à l'évent pour évacuer les gaz plus loin des sources d'étincelles possibles ou des parties chaudes du moteur d'un véhicule.

Les exigences en matière de sécurité préconisées par les constructeurs automobiles notamment deviennent de plus en plus contraignantes en relation avec l'écoulement d'acide en cas de renversement de la batterie.

Un grand nombre de demandes de brevet décrivent des couvercles présentant des solutions à ces problèmes.

Le document EP-A-0 639 862 présente un bac de batterie multicellulaire recouvert par un couvercle dans lequel est incorporé un collecteur de gaz. Ce dernier est rectiligne est s'étend entre deux parois latérales opposées du couvercle. Le collecteur de gaz communique avec l'intérieur de chaque cellule pour la collecte de gaz créés par l'activité de la batterie. Il débouche à chacune de ses deux extrémités dans un canal latéral, perpendiculaire au collecteur de gaz, agencé dans une paroi latérale du couvercle. Le canal latéral est muni d'une chicane pour la séparation de condensats et de gouttes provoquées par le changement de direction des gaz à la jonction entre le collecteur de gaz et le canal latéral. Chaque canal latéral communique avec une cavité située latéralement par rapport au collecteur de gaz. Dans la cavité est logée une pièce insérée qui recouvre la cavité. La pièce insérée porte une pastille frittée poreuse obiique et est munie d'un évent en aval de la pastille frittée poreuse. A l'arrière de la cavité se trouve une chambre située sous la pastille frittée poreuse. A l'avant de la cavité, devant la chambre, se trouve un réservoir collecteur dans lequel débouche le canal latéral et qui s'ouvre sur la chambre. Ainsi, tous les gaz passent du canal latéral dans le réservoir collecteur et la chambre, puis à travers la pastille frittée poreuse et l'évent pour rejoindre le milieu extérieur. L'humidité et les gouttes d'électrolyte séparées dans le canal et la chambre sont collectées dans le réservoir collecteur. La disposition du réservoir collecteur en avant de la cavité, alors que la pastille frittée se trouve en arrière, permet d'éviter que la pastille frittée ne soit au-dessus de l'acide récolté dans ce dernier. Toutefois, si la batterie est secouée, l'acide contenu dans le réservoir de collecte est projeté contre la pastille frittée, à travers la chambre de collecte. De plus, en cas d'inclinaison de la batterie, l'acide pénètre immédiatement dans la chambre de la pastille frittée qui est contiguë au réservoir collecteur et contacte la pastille frittée, ce qui provoque rapidement un épanchement de l'acide récolté vers l'extérieur. Enfin, aucune précaution n'a été prise pour limiter l'épanchement d'acide à l'extérieur de la batterie en cas de renversement.

La demande de brevet WO01029911 décrit un couvercle pour batterie qui comprend un collecteur de gaz incorporé, communicant avec l'intérieur des cellules d'un bac de batterie, qui s'étend jusqu'aux parois latérales du couvercle. Une cavité, dans la paroi latérale du couvercle, est décalée latéralement par rapport au collecteur de gaz. Un canal latéral, dans la paroi latérale, relie le collecteur de gaz à la cavité. Une plaque pourvue d'un évent recouvre la cavité. Une pastille frittée est logée dans la cavité et y est disposée de manière à ce que tous les gaz passent à travers la pastille frittée puis l'évent vers le milieu extérieur. Le collecteur de gaz débouche dans une chambre intermédiaire située dans le canal latéral, le fond de la chambre intermédiaire servant de collecteur d'électrolyte. Un orifice de passage, dans une paroi de la chambre intermédiaire, permet le passage des gaz dans le canal latéral. Le document US 4,463,069 présente un couvercle de batterie comprenant une ouverture en forme de fente rectangulaire. Cette ouverture permet d'évacuer les gaz de la batterie.

Malgré toutes ces précautions, il a été constaté que les batteries traditionnelles peuvent sous certaines conditions exploser. En effet lors de la charge de la batterie, de l'hydrogène et de l'oxygène sont dégagés et peuvent sous certaines conditions s'enflammer à la sortie de l'évent. Le feu risque alors de se propager à travers l'évent jusqu'à la pastille frittée, brûler celle-ci et se propager à l'intérieur de la batterie. A ce moment-là la batterie explose et l'acide sulfurique peut être projeté dans l'environnement.

### Objet de l'invention

Un objet de la présente invention est dès lors de proposer un couvercle pour batterie pouvant évacuer les gaz créés par l'activité chimique de la batterie, et qui permette une meilleure protection contre l'explosion de la batterie.

Conformément à l'invention, cet objectif est atteint par un couvercle de batterie comprenant au moins un collecteur de gaz incorporé, pour communiquer avec l'intérieur d'au moins une cellule d'un bac de batterie, qui s'étend jusqu'à au moins une des parois latérales du couvercle. Une cavité dans laquelle débouche le collecteur de gaz est aménagée dans la paroi latérale du couvercle. Une plaque pourvue d'un évent recouvre la cavité. Une pastille frittée est logée dans la cavité et est disposée de manière à ce que tous les gaz passent à travers la pastille frittée puis à travers l'évent vers le milieu extérieur. Selon un aspect important de l'invention l'évent présente une surface interne supérieure et une surface interne inférieure, la distance entre la surface supérieure et la surface intérieure inférieure étant inférieure à environ 1,0 mm. Le rapport entre la surface utile totale de l'évent (à travers laquelle passe les gaz) et la distance entre la surface supérieure et la surface intérieure inférieure de l'évent est comprise entre 2 et 5 et de préférence entre 2,5 et 4.

Ces rapports et tailles excluent donc la forme circulaire jusqu'alors utilisée pour les évents. Il a été constaté que les évents qui répondent aux critères tels que définis ci-dessus garantissent que la flamme ne remonte pas à travers l'évent à l'intérieur de la batterie. La flamme reste bien à l'extérieur de l'évent.

De préférence, la longueur de l'évent, c'est à dire la distance entre l'entrée et la sortie de l'évent est comprise entre 6 et 15 fois et de préférence entre 8 et 12 fois la distance entre la surface supérieure et la surface intérieure inférieure de l'évent. De préférence, cette longueur de l'évent est supérieure à 8 mm.

Selon un autre aspect de l'invention la cavité est décalée latéralement par rapport au collecteur de gaz et un canal latéral y est aménagé pour relier la cavité au collecteur de gaz. Le collecteur de gaz débouche dans une chambre intermédiaire située dans le canal latéral, le fond de la chambre intermédiaire servant de collecteur d'électrolyte. Un orifice de passage, dans une paroi de la chambre intermédiaire, permet l'écoulement des gaz de la chambre intermédiaire vers le canal latéral.

Les gaz créés par les réactions chimiques dans la batterie et collectés par le collecteur de gaz sont donc amenés à la chambre intermédiaire. L'humidité de ces gaz, c'est-à-dire l'électrolyte entraîné, se dépose sur les parois de la chambre intermédiaire sous forme de condensats et gouttelettes qui s'écoulent dans le fond de la chambre intermédiaire. Les gaz substantiellement asséchés s'écoulent en direction de la cavité. Tous les gaz passent ensuite à travers la pastille frittée puis l'évent vers le milieu extérieur, la pastille frittée empêchant, le cas échéant, le retour de flammes vers l'intérieur de la batterie. La présence de la chambre intermédiaire devant le collecteur de gaz simplifie le retour de l'électrolyte collecté dans la chambre intermédiaire vers l'intérieur de la batterie. Grâce à l'orifice de passage, les gaz ont un cheminement complexe avant d'atteindre la cavité, ce qui augmente la séparation de l'humidité des gaz. De plus, il n'est pas possible que l'électrolyte accumulé dans la chambre intermédiaire, qui fait office de réservoir collecteur, soit projeté vers la pastille frittée depuis la chambre intermédiaire. En fait, si la batterie est secouée dans la direction de la pastille frittée, l'électrolyte ne peut pas s'échapper de la chambre intermédiaire. La pastille frittée est donc protégée contre des projections d'acide. En cas de renversement, l'écoulement d'électrolyte doit suivre le même cheminement complexe que les gaz. L'électrolyte ne peut pas s'écouler directement du canal collecteur dans la cavité, ce qui limite l'épanchement d'électrolyte à l'extérieur de la batterie.

De préférence, la chambre intermédiaire a sensiblement une forme de parallélépipède rectangle (en forme de U), le collecteur de gaz débouchant dans la partie supérieure de la chambre intermédiaire. De plus, l'orifice de passage peut être une fente sensiblement horizontale située dans une paroi ou dans les deux parois verticales de la chambre intermédiaire, juste sous une arête supérieure.

Avantageusement, les parois verticales de la chambre intermédiaire s'élèvent au-delà du bord inférieur du collecteur de gaz. Ainsi, lorsque le niveau d'électrolyte dans la chambre intermédiaire dépasse le bord inférieur du collecteur de gaz, le retour de l'électrolyte vers l'intérieur de la batterie se fait spontanément.

Selon un mode de réalisation avantageux, deux cloisons sensiblement verticales munies chacune d'une fente sensiblement horizontale, à des hauteurs différentes, sont installées dans le canal latéral en aval de la chambre intermédiaire. On forme ainsi quatre chambres de séparation et de collecte successives, du collecteur de gaz jusqu'à la pastille frittée : (1) la chambre intermédiaire, (2) de l'extrémité fermée du canal jusqu'à la première cloison verticale, (3) entre les deux cloisons verticales, et (4) de la deuxième cloison verticale à la pastille frittée.

De préférence, la plaque présente un support de pastille frittée qui pénètre à l'intérieur de la cavité, la pastille frittée étant logée sensiblement verticalement dans ce support de pastille frittée. L'évent est situé devant ce support de pastille frittée. Ceci facilite la production du couvercle par moulage par injection. Pour la même raison, le canal peut être formé par une rainure dans la paroi latérale du couvercle qui est recouverte par la plaque, une fois que celle-ci est en place. On peut donc former en même temps que le couvercle la chambre intermédiaire et les cloisons, puis simplement recouvrir le canal latéral et la cavité en fixant la plaque.

Avantageusement, le bas de l'orifice de passage, le centre du collecteur de gaz et le centre de la pastille frittée sont dans un même plan horizontal. Cette disposition favorise le retour de l'électrolyte accumulé vers l'intérieur de la batterie. En effet, lorsque le niveau d'électrolyte présent dans le canal latéral dépasse ce plan, l'électrolyte accumulé dans le canal latéral peut pénétrer dans la chambre intermédiaire et retourner à l'intérieur de la batterie. Ce phénomène se produit spontanément et permet de conserver toujours au moins la moitié de la pastille frittée libre pour l'évacuation des gaz.

Selon un mode de réalisation préféré, le collecteur de gaz est rectiligne et relie des bouchons installés dans le couvercle, le collecteur de gaz s'étendant jusqu'aux deux parois opposées du couvercle et débouchant à chaque fois dans une chambre intermédiaire comprenant un orifice de passage pour le passage des gaz dans un canal latéral.

### Brève description des dessins

D'autres particularités et caractéristiques de l'invention ressortiront de la description détaillée de quelques modes de réalisation avantageux présentés ci-dessous, à titre d'illustration, en se référant aux dessins annexés. Ceux-ci montrent:
Fig. 1: est une vue de dessus d'un couvercle pour batterie selon un mode de réalisation préféré de l'invention;
Fig. 2: est une vue en coupe A-A de la Fig.1;
Fig. 3: est vue en coupe B-B du couvercle de la Fig.1 ;
Fig. 4: une vue arrière d'une plaque pour un couvercle selon la Fig. 8 ;
Fig. 5 : une vue en coupe C-C de la Fig.4 ;
Fig. 6 : une vue en coupe selon D-D de la Fig. 4 ;
Fig. 6a, 6b, 6c : essais comparatifs entre une batterie classique et des batteries ayant des évents de dimensions différentes.
Fig. 7: une vue en perspective arrière d'une plaque selon la Fig. 4 ;
Fig. 8: est une vue en perspective d'un couvercle pour batterie selon un autre mode de réalisation préféré de l'invention;
Fig. 9: une vue en perspective de la face arrière d'une plaque pour un couvercle selon la Fig. 8 ;
Fig. 10: une vue en perspective de la face avant d'une plaque pour un couvercle selon la Fig. 8 ;

### Description d'une exécution préférée

Sur les figures, les mêmes références désignent des éléments identiques ou similaires.

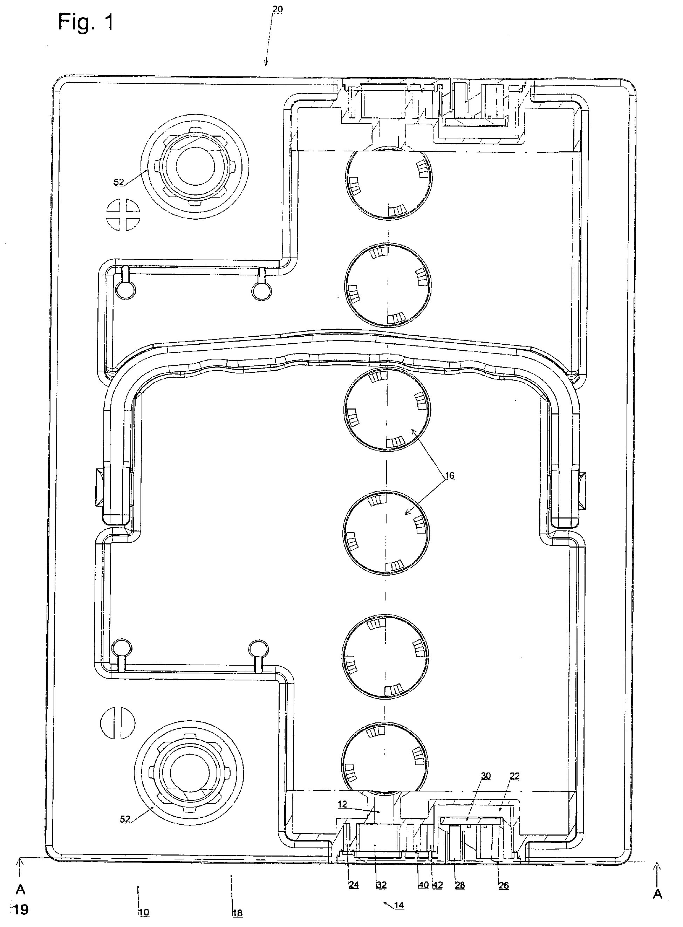

Sur la Fig.1 est illustré une vue de face d'un mode de réalisation préféré d'un couvercle 10 pour batterie selon l'invention. Deux zones découpées laissent apparaître la structure interne du couvercle 10. Comme on le voit, un collecteur de gaz 12, aligné selon un axe 14 passant par le centre de bouchons 16, est incorporé dans le couvercle 10. Le collecteur de gaz 12, qui s'étend jusqu'aux deux parois latérales 18 et 20 opposées du couvercle 10, relie entre eux les bouchons 16 et permet ainsi la communication avec l'intérieur des cellules d'un bac de batterie multicellulaire.

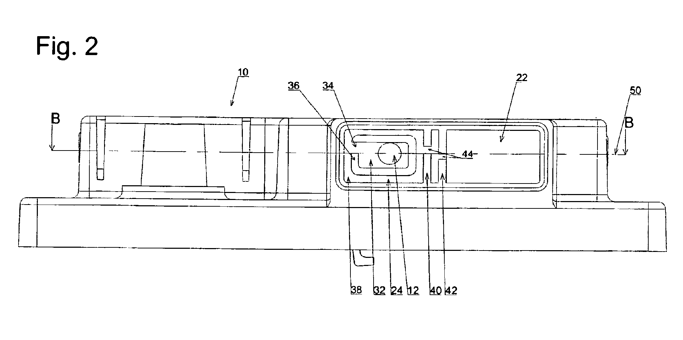

Pour alléger la description, on décrira seulement la structure du couvercle 10 au niveau de la paroi latérale 18 située en bas de la Fig.1 ; toutefois, les structures aux deux extrémités du collecteur de gaz 12, c'est-à-dire dans les deux parois latérales 18 et 20, sont identiques. Dans la paroi latérale 18 se trouve une cavité 22, laquelle est décalée latéralement par rapport au collecteur de gaz 12. Un canal latéral 24 (voir aussi Fig. 2), également dans la paroi latérale 18 et perpendiculaire au collecteur de gaz 12, relie ce dernier à la cavité 22. Une plaque 26 munie d'un évent 28 recouvre la cavité 22. Au fond de la cavité 22 est logée verticalement une pastille frittée 30 poreuse qui est disposée de manière à ce que tous les gaz arrivant dans la cavité 22 la traversent avant de s'échapper à travers l'évent 28 vers le milieu extérieur. La pression à l'intérieur de la batterie peut donc être réduite et la batterie est protégée contre les retours de flammes.

Il sera apprécié que le collecteur de gaz 12 débouche dans une chambre intermédiaire 32, située dans le canal latéral 24. Sur la Fig.2, qui montre une vue de dessous en coupe A-A du couvercle 10 de la Fig.1, on identifie plus facilement cette chambre intermédiaire 32 sensiblement en forme de parallélépipède rectangle. Un orifice de passage 34 en forme de fente horizontale est agencé dans la paroi 36 de la chambre intermédiaire 32 opposée à la cavité 22, de préférence sous le coin supérieur. Ainsi, lorsque les gaz débouchent du collecteur de gaz 12 dans la partie supérieure de la chambre intermédiaire 32, on provoque un changement de direction à 90°, pour leur passage dans le canal latéral 24 à travers l'orifice de passage 34. Ce brusque changement de direction provoque le dépôt de condensats et de gouttelettes d'électrolyte amenés par les gaz sur les parois de la chambre intermédiaire 32, qui s'accumulent dans le fond de celle-ci. Le retour d'électrolyte vers l'intérieur de la batterie est favorisé par la forme de la chambre intermédiaire 32 dont les parois s'élèvent au-delà du bord inférieur du collecteur de gaz 12. L'électrolyte accumulé retourne donc spontanément dans le collecteur de gaz 12 quand le niveau d'électrolyte dans la chambre intermédiaire 32 dépasse le bord inférieur du collecteur de gaz 12. Après la sortie de l'orifice de passage 34, les gaz subissent un deuxième changement de direction contre l'extrémité fermée 38 du canal latéral 24, l'autre extrémité du canal latéral 24 débouchant dans la cavité 22. Les gaz sont donc inversés contre cette extrémité fermée 38 et s'écoulent ensuite vers la cavité 22, inversion qui favorise le dépôt d'humidité. Ce double changement de direction permet une séparation efficace de l'humidité des gaz. Par ailleurs, en cas d'inclinaison de la batterie vers la pastille frittée 30, il est clair que l'électrolyte accumulé dans la chambre intermédiaire 32 ne peut pas être projeté sur la pastille frittée 30, puisqu'il n'existe pas d'orifice de passage de ce côté de la chambre intermédiaire 32. En inclinant la batterie dans l'autre sens, l'électrolyte s'écoule dans le canal latéral 24, vers l'extrémité fermée 38. Il est clair qu'en cas de renversement de la batterie, l'épanchement d'électrolyte est limité car l'électrolyte doit suivre le même chemin que les gaz.

Sur la Fig.2 on aperçoit également deux cloisons verticales 40 et 42 placées l'une derrière l'autre dans le canal latéral 24, entre la chambre intermédiaire 32 et la cavité 22. Ces deux cloisons 40 et 42 possèdent chacune une fente horizontale 44, mais à des hauteurs différentes. On forme ainsi quatre chambres de séparation et de collecte successives entre le collecteur de gaz 12 et la pastille frittée 30 : (1) la chambre intermédiaire 32, (2) de l'extrémité fermée 38 du canal latéral 24 à la première cloison 40, (3) entre les deux cloisons 40 et 42, et (4) de la deuxième cloison 42 à la pastille frittée 30. L'agencement de ces quatre chambres de séparation et de collecte successives provoque de nombreux changements de direction des gaz, améliorant ainsi la séparation de l'humidité des gaz et sa retenue avant la pastille frittée 30.

Sur la Fig.2, le signe de référence 50 indique un plan horizontal, donc parallèle à la surface de l'électrolyte, qui comprend le bas de la fente horizontale formant l'orifice de passage 34 de la chambre intermédiaire 32, l'axe du collecteur de gaz 12 et le centre de la pastille frittée 30, vu l'agencement de la pastille frittée 30 dans la cavité 22. On notera aussi que le bas des fentes horizontales 44 des cloisons verticales 40 et 42 n'est pas situé au-dessus de ce plan 50. En conséquence, dès que le niveau d'électrolyte accumulé dans les quatre chambres de séparation et de collecte dépasse le niveau du plan 50, l'électrolyte peut passer spontanément d'une chambre à l'autre et retourner vers l'intérieur de la batterie. C'est pourquoi, la moitié supérieure de la pastille frittée 30 est toujours libre pour l'évacuation des gaz.

Reste à noter que la cavité 22 et le canal latéral 24 sont disposés de manière à s'éloigner des pôles 52 de la batterie, ce qui permet d'éloigner la sortie des gaz, c'est-à-dire l'évent 28, des pôles 52.

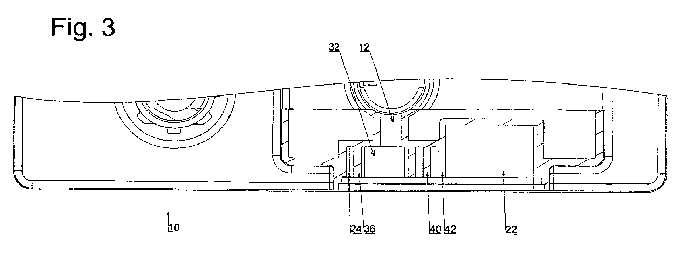

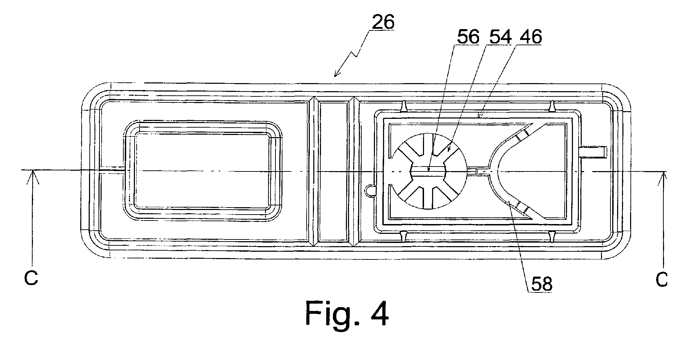

On remarquera d'après les Figs. 1 à 3 que la plaque 26, montrée en vue arrière sur la Fig.4, ne couvre pas uniquement la cavité 22 mais également le canal latéral 24. Lors de la fabrication du couvercle 10, qui se fait en général par moulage par injection, on peut alors former en même temps le canal latéral 24, qui est ici une rainure dans la paroi latérale 18, la cavité 22, la chambre intermédiaire 32 et les cloisons verticales 40 et 42. On obtient un couvercle 10 tel que représenté sur la Fig.3, qui montre une vue de dessous du couvercle 10 de la Fig. 2 en coupe B-B.

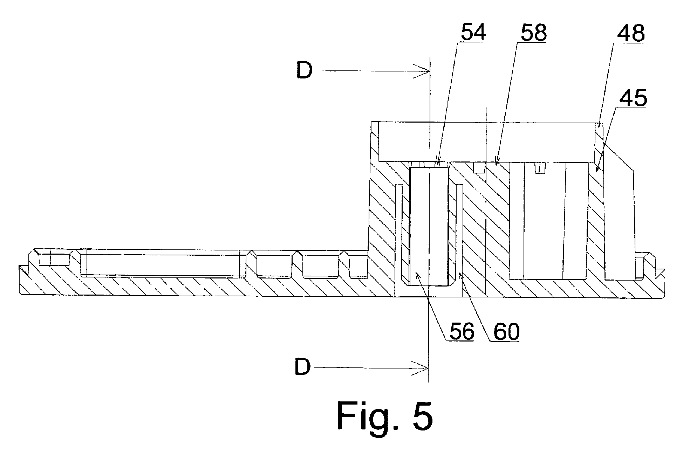

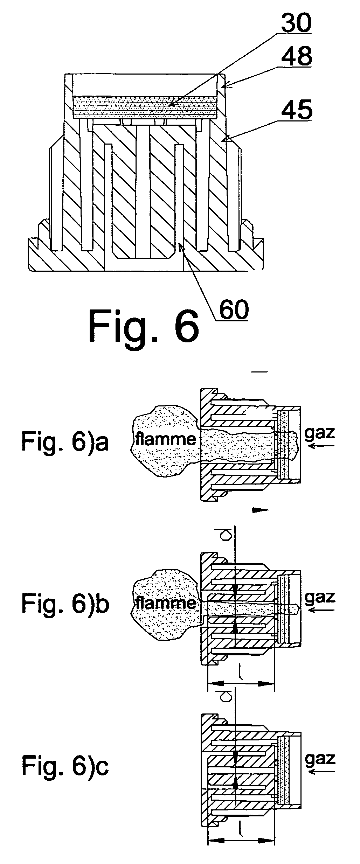

La Fig.5 montre une vue en coupe C-C de la plaque 26 de la Fig.4. La Fig. 6 quant à elle montre une coupe selon D-D de la fig. 5. Dans la partie droite des Figs. 4 et 5 on remarquera la présence d'un support 45 de pastille frittée 46 qui pénètre dans la cavité 22 lorsque la plaque 26 est fixée au couvercle 10. Au fond du support 45 de pastille frittée 46 se trouve un cadre vertical 48 dans lequel est logée la pastille frittée. Celle-ci est maintenue en place dans son cadre 48 d'une part par une nervure de maintien 58 et d'autre part par l'évent 28. Au vu des Fig.2 et 4, il apparaît clairement que la pastille frittée 30 est sensiblement centrée dans la cavité 22. L'évent 28 est agencé en avant du support 45 de pastille frittée 30 et comporte sur la partie tournée vers la pastille frittée plusieurs rainures 54 facilitant le passage des gaz dans l'évent 28.

Sur les Figs. 4, 5 et 6 on remarque la forme particulière de la lumière 56 en forme de fente de l'évent 28 qui empêche la flamme de remonter à l'intérieur de l'évent 28. L'évent présente une surface interne supérieure et une surface interne inférieure, la distance entre ces surfaces étant inférieure à environ 1,0 mm. Le rapport entre la surface utile totale de l'évent (la lumière 56 à travers laquelle passe les gaz) et la distance entre la surface supérieure et la surface intérieure inférieure de l'évent est comprise entre 2 et 5 et de préférence entre 2,5 et 4, la longueur de l'évent étant comprise entre 6 et 15 fois et de préférence entre 8 et 12 fois la distance entre la surface supérieure et la surface intérieure inférieure de l'évent. Il a été constaté que si la longueur de l'évent est supérieure à environ 8 mm, la flamme s'éteint tout de suite alors que si la longueur de l'évent est inférieure à environ 8 mm, la flamme ne s'éteint pas mais elle ne remonte pas à l'intérieur de l'évent.

On remarque également que la sortie de l'évent est légèrement en retrait de la face frontale de la plaque 26.

Une fente annulaire 60 est aménagée dans la plaque 26 et entoure l'évent 28 sur une partie de sa longueur. Un tuyau en matière plastique peut, en cas de besoin être inséré dans cette fente annulaire 60.

Les Fig. 6a, 6b, 6c montrent des essais comparatifs entre une batterie classique et des batteries ayant des évents de dimensions différentes.

Dans ces figures, d représente la distance entre la surface supérieure interne et la surface inférieure interne de l'évent et L la longueur de l'évent, c-à-d la distance comprise entre la pastille frittée (30) et la sortie des gaz de la batterie.

Les figures Fig. 6a, 6b, et 6c montrent des essais comparatifs entre une batterie classique (6a), une batterie qui comprend un évent dont la distance « d » entre la surface interne supérieure et la surface interne inférieure est supérieur à 1.0 mm, le rapport entre la surface utile totale de l'évent et de la distance d entre la surface supérieure et la surface inférieure de l'évent est supérieur à 5, ne correspondant pas aux critères selon l'invention (6b), et une batterie qui comprend un évent dont la distance d entre la surface interne supérieure et la surface interne inférieure est inférieure ou égale à 1.0 mm, le rapport entre la surface utile totale de l'évent et de la distance entre la surface supérieure et la surface inférieure de l'évent est comprise entre 2 et 5 et dont la longueur de l'évent est supérieure à 8 mm (6c).

De nombreux essais de variation des dimensions de l'évent d'une batterie ont permis d'établir les conditions qui empêchent les batteries d'exploser. L'utilisation d'un évent dont la distance entre les surfaces internes supérieures et inférieures (« d » sur figures 6a, 6b, 6c) est supérieure à 1.0 mm permet (fig. 6a et 6b) à une flamme de pénétrer dans l'évent, de faire fondre la pastille frittée (30) et de faire exploser la batterie.

La réduction de la distance d inférieure à 1.0 mm permet d'empêcher la flamme de pénétrer dans l'évent et à la batterie d'exploser. La flamme se détache de l'évent et s'éteint d'elle même. (fig. 6 c).

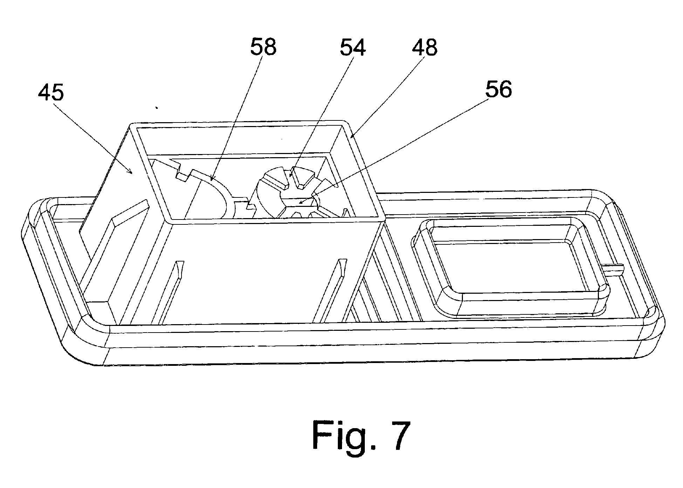

La Fig. 7 montre une vue en perspective de l'arrière de la plaque 26.

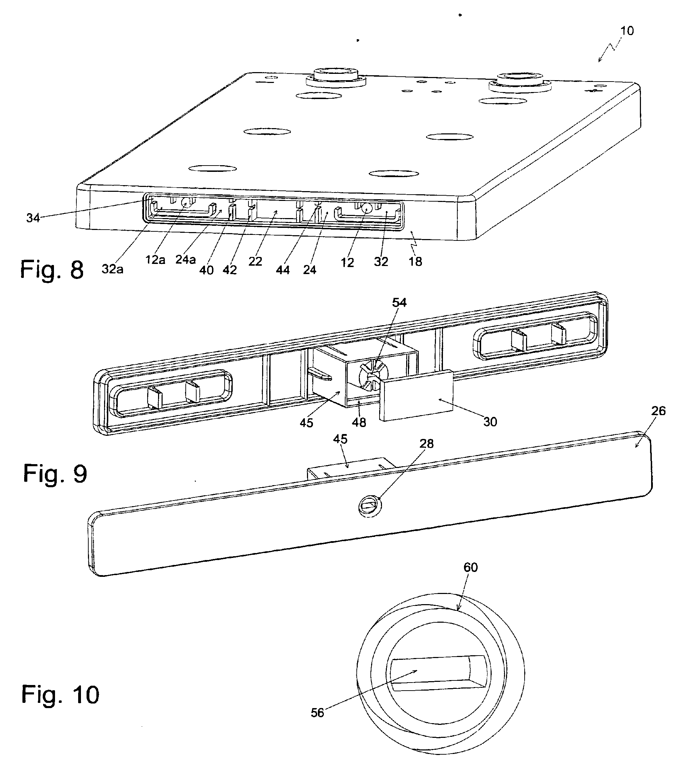

Les Figs. 8, 9, et 10 montrent un autre mode de réalisation préférée d'un couvercle pour batteries plomb/acide. Il s'agit ici d'une batterie pour poids lourds. Comme ce genre de batterie possède des capacités beaucoup plus élevées que les batteries pour voiture individuelles, le volume de gaz généré lors de la charge est beaucoup plus important.

Sur la Fig. 8 est illustrée une vue en perspective d'un couvercle 10 d'une batterie pour poids lourds selon l'invention. La face avant laisse apparaître la structure interne du couvercle 10. Comme on le voit, deux collecteurs de gaz 12, 12a alignés selon deux axes parallèles passant par le centre de chaque rangée de bouchons 16, 16a sont incorporés dans le couvercle 10. Les collecteurs de gaz 12, 12a qui s'étendent jusqu'aux deux parois avant et arrière du couvercle 10, relient entre eux les bouchons de chaque rangée et permettent ainsi la communication avec l'intérieur des cellules d'un bac de batterie multicellulaire.

On décrira seulement la structure du couvercle 10 au niveau de la paroi latérale avant 18 située en bas de la Fig. 8 ; toutefois, les structures aux deux extrémités des collecteurs de gaz 12, 12a c'est-à-dire dans les deux parois latérales avant et arrière 18 et 20, sont identiques. Dans la paroi latérale 18 se trouve une cavité 22, située entre les deux collecteurs de gaz 12, 12a. Un canal latéral 24, 24a également dans la paroi latérale 18 et perpendiculaire aux collecteurs de gaz 12, 12a relie ces derniers à la cavité 22. Une plaque 26 munie d'un évent 28 recouvre la cavité 22. Au fond de la cavité 22 est logée verticalement une pastille frittée 30 poreuse qui est disposée de manière à ce que tous les gaz arrivant dans la cavité 22 la traversent avant de s'échapper à travers l'évent 28 vers le milieu extérieur.

Il sera apprécié que les collecteurs de gaz 12, 12a débouchent chacun dans une chambre intermédiaire 32, 32a située dans chacun des canaux latéraux 24 et 24a. Sur la Fig.8, on identifie facilement ces chambres intermédiaires 32 et 32a sensiblement en forme de U. Un orifice de passage 34 en forme de fente horizontale est agencé au-dessus des deux branches du U de la paroi 36 de la chambre intermédiaire 32. Le retour d'électrolyte vers l'intérieur de la batterie est favorisé par la forme de la chambre intermédiaire 32 dont les parois (les branches du U) s'élèvent au-delà du bord inférieur du collecteur de gaz 12, 12a. Après la sortie de l'orifice de passage 34, les gaz débouchent dans la cavité 22.

Sur la Fig.8 on aperçoit également deux cloisons verticales 40 et 42 placées l'une derrière l'autre dans chacun des canaux latéraux 24, 24a entre la chambre intermédiaire 32, 32a et la cavité 22. Ces deux cloisons 40 et 42 possèdent chacune une fente horizontale 44, mais à des hauteurs différentes.

L'agencement de ces quatre chambres de séparation et de collecte successives pour chaque canal latéral 24, 24a provoque de nombreux changements de direction des gaz, améliorant ainsi la séparation de l'humidité des gaz et sa retenue avant la pastille frittée 30.

On remarquera d'après les Figs. 9 à 10 que la plaque 26, montrée en vue arrière sur la Fig. 9, ne couvre pas uniquement la cavité 22 mais également les canaux latéraux 24, 24a. Dans la partie centrale des Figs. 9 et 10 on remarquera la présence d'un support 45 de pastille frittée 46 qui pénètre dans la cavité 22 lorsque la plaque 26 est fixée au couvercle 10. Au fond du support 45 de pastille frittée 30 se trouve un cadre vertical 48 dans lequel est logée la pastille frittée. Celle-ci est maintenue en place dans son cadre 48 par l'évent 28. Il apparaît que la pastille frittée 30 est sensiblement centrée dans la cavité 22. L'évent 28 est agencé en avant du support de pastille frittée 46 et comporte sur la partie tournée vers la pastille frittée plusieurs rainures 54 facilitant le passage des gaz dans l'évent 28.

Tout comme dans le premier mode de réalisation (Figs. 1-7), on remarque la forme particulière de la lumière 56 en forme de fente de l'évent 28 qui empêche la flamme de remonter à l'intérieur de l'évent 28. On remarque également que la sortie de l'évent est légèrement en retrait de la face frontale de la plaque 26 Les mesures de l'évent (largeur, surface libre et longueur) ont été confirmées suite à des essais réalisés spécialement sur ce type de pièce.

Une fente annulaire 60 est aménagée dans la plaque 26 et entoure l'évent 28 sur une partie de sa longueur. Un tuyau en matière plastique peut, en cas de besoin être insérée dans cette fente annulaire 60.

### Légende:

| | |
|---|---|
| 10 | couvercle |
| 12, 12a | collecteur de gaz |
| 14 | axe |
| 16 | bouchon |
| 18 | paroi latérale avant |
| 20 | paroi latérale arrière |
| 22 | cavité |
| 24,24a | canal latéral |
| 26 | plaque |
| 28 | évent |
| 30 | pastille frittée |
| 32, 32a | chambre intermédiaire |
| 34 | orifice de passage |
| 36 | paroi |
| 38 | extrémité fermée |
| 40 | cloison verticale |
| 42 | cloison verticale |
| 44 | fente horizontale |
| 45 | support pour la pastille frittée |
| 46 | pastille frittée |
| 48 | cadre vertical |
| 50 | plan |
| 52 | pôles |
| 54 | rainures dans la partie arrière de l'évent |
| 56 | passage en forme de fente |
| 58 | nervure de maintien pour la pastille |
| 60 | fente annulaire |

## Revendications

1. Couvercle (10) pour batterie comprenant :
au moins un collecteur de gaz (12) incorporé dans le couvercle (10) pour communiquer avec l'intérieur d'au moins une cellule d'un bac de batterie et s'étendant jusqu'à une des parois latérales (18, 20) du couvercle (10) ;
une cavité (22) dans la paroi latérale (18);
une plaque (26) recouvrant la cavité (22), la plaque étant pourvue d'un évent (28); et
une pastille frittée (30) logée dans la cavité (22) et disposée de manière à ce que tous les gaz passent à travers la pastille frittée (30) puis l'évent (28) vers le milieu extérieur ;
**caractérisé en ce que**
l'évent (28) présente une surface interne supérieure et une surface interne inférieure,
la distance entre la surface interne supérieure et la surface interne inférieure étant inférieure ou égale à 1,0mm
**en ce que** le rapport entre la surface utile totale de l'évent (28) (à travers laquelle passe les gaz) et la distance entre la surface supérieure et la surface inférieure de l'évent (28) est comprise entre 2 et 5.

2. Couvercle (10) selon la revendication 1, **caractérisé en ce que** la distance entre la surface interne supérieure et la surface interne inférieure est inférieure ou égale à 1,0 mm et **en ce que** le rapport entre la surface utile totale de l'évent (28) et la distance entre la surface supérieure et la surface inférieure de l'évent (28) est comprise entre 2,5 et 4.

3. Couvercle (10) selon la revendication 1 ou 2, **caractérisé en ce que** la longueur de l'évent (28) (la distance entre l'entrée et la sortie) est comprise entre 6 et 15 fois et de préférence entre 8 et 12 fois la distance entre la surface supérieure et la surface intérieure inférieure de l'évent (28).

4. Couvercle (10) selon la revendication 1, 2 ou 3, **caractérisé en ce que** la cavité (22) est décalée latéralement par rapport au collecteur de gaz (12); et **en ce qu'**un canal latéral (24) aménagé dans la paroi latérale (18) relie le collecteur de gaz (12) à la cavité (22).

5. Couvercle (10) selon l'une des revendications 1 à 4, **caractérisé par** une chambre intermédiaire (32) située dans le canal latéral (24) et dans laquelle débouche le collecteur de gaz (12), le fond de la chambre intermédiaire (32) servant de collecteur d'électrolyte ; et un orifice de passage (34) dans une paroi de la chambre intermédiaire (32) pour le passage des gaz dans le canal latéral (24).

6. Couvercle (10) selon l'une des revendications 1 à 5, **caractérisé en ce que** la chambre intermédiaire (32) a sensiblement une forme de parallélépipède rectangle, le collecteur de gaz (12) débouchant dans la partie supérieure de la chambre intermédiaire (32) et l'orifice de passage (34) étant une fente (44) sensiblement horizontale située dans au moins une des parois (18, 20) de la chambre, juste sous une arête supérieure.

7. Couvercle (10) selon l'une des revendications 1 à 6, **caractérisé en ce que** les parois (18, 20) de la chambre intermédiaire (32) s'élèvent au-delà du bord inférieur du collecteur de gaz (12) de manière à favoriser le retour d'électrolyte vers l'intérieur de la batterie.

8. Couvercle (10) selon l'une des revendications 1 à 7, **caractérisé par** deux cloisons (40, 42) sensiblement verticales munies chacune d'une fente (44) sensiblement horizontale, à des hauteurs différentes, les cloisons verticales (40, 42) étant installées dans le canal latéral (24) en aval de la chambre intermédiaire (32).

9. Couvercle (10) selon l'une quelconque des revendications précédentes, **caractérisé en ce que** la plaque (26) présente un support de pastille frittée (45) qui pénètre à l'intérieur de la cavité (22), la pastille frittée (30) étant logée sensiblement verticalement dans ce support de pastille frittée (45); et **en ce que** l'évent (28) est situé devant le support de pastille frittée (45).

10. Couvercle (10) selon l'une quelconque des revendications précédentes, **caractérisé en ce que** le canal latéral (24) est formé par une rainure, dans la paroi latérale du couvercle, recouverte par la plaque (26).

11. Couvercle (10) selon l'une quelconque des revendications précédentes, **caractérisé en ce que** le bas de l'orifice de passage (34), le centre du collecteur de gaz (12) et le centre de la pastille frittée (30) sont dans un même plan horizontal (50).

12. Couvercle (10) selon l'une quelconque des revendications précédentes, **caractérisé en ce que** le collecteur de gaz (12) est rectiligne et relie des bouchons (16) installés dans le couvercle (10), le collecteur de gaz (12) s'étendant jusqu'aux deux parois opposées (18, 20) du couvercle (10) et débouchant à chaque fois dans une chambre intermédiaire (32, 32a) comprenant un orifice de passage (34) pour le passage des gaz dans un canal latéral (24, 24a).

13. Batterie comprenant un couvercle (10) selon l'une quelconque des revendications précédentes.

## Claims

1. A battery cover (10) comprising:
at least one gas collector (12) incorporated in the cover (10) for communicating with the inside of at least one cell of a battery case and extending as far as one of the lateral walls (18, 20) of the cover (10);
a cavity (22) in the lateral wall (18);
a plate (26) covering the cavity (22), the plate being provided with a vent (28);
and
a sintered compact (30) accommodated in the cavity (22) and arranged such that all the gases pass through the sintered compact (30) and then the vent (28) to the external environment;
**characterised in that**
the vent (28) has an upper internal surface and a lower internal surface,
the distance between the upper internal surface and the lower internal surface being less than or equal to 1.0 mm,
**in that** the ratio between the total useful surface area of the vent (28) (through which the gases pass) and the distance between the upper surface and the lower surface of the vent (28) is between 2 and 5.

2. A cover (10) according to claim 1, **characterised in that** the distance between the upper internal surface and the lower internal surface is less than or equal to 1.0 mm and **in that** the ratio between the total useful surface area of the vent (28) and the distance between the upper surface and the lower surface of the vent (28) is between 2.5 and 4.

3. A cover (10) according to claim 1 or claim 2, **characterised in that** the length of the vent (28) (the distance between inlet and outlet) is between 6 and 15 times and preferably between 8 and 12 times the distance between the upper surface and the lower internal surface of the vent (28).

4. A cover (10) according to claim 1, 2 or 3, **characterised in that** the cavity (22) is offset laterally relative to the gas collector (12); and **in that** a lateral channel (24) formed in the lateral wall (18) connects the gas collector (12) to the cavity (22).

5. A cover (10) according to any one of claims 1 to 4, **characterised by** an intermediate chamber (32) located in the lateral channel (24) and into which the gas collector (12) leads, the bottom of the intermediate chamber (32) serving as an electrolyte collector; and a passage orifice (34) in a wall of the intermediate chamber (32) for the passage of gases into the lateral channel (24).

6. A cover (10) according to any one of claims 1 to 5, **characterised in that** the intermediate chamber (32) has the form substantially of a right parallelepiped, the gas collector (12) leading into the upper part of the intermediate chamber (32) and the passage orifice (34) being a substantially horizontal slot (44) located in at least one of the walls (18, 20) of the chamber, just under an upper edge.

7. A cover (10) according to any one of claims 1 to 6, **characterised in that** the walls (18, 20) of the intermediate chamber (32) extend beyond the lower edge of the gas collector (12) so as to encourage electrolyte to return towards the inside of the battery.

8. A cover (10) according to any one of claims 1 to 7, **characterised by** two substantially vertical partitions (40, 42) each provided with a substantially horizontal slot (44), at different levels, the vertical partitions (40, 42) being fitted in the lateral channel (24) downstream of the intermediate chamber (32).

9. A cover (10) according to any one of the preceding claims, **characterised in that** the plate (26) has a sintered compact support (45) which projects inside the cavity (22), the sintered compact (30) being accommodated substantially vertically in said sintered compact support (45); and **in that** the vent (28) is situated in front of the sintered compact support (45).

10. A cover (10) according to any one of the preceding claims, **characterised in that** the lateral channel (24) is formed by a groove, in the lateral wall of the cover, covered by the plate (26).

11. A cover (10) according to any one of the preceding claims, **characterised in that** the bottom of the passage orifice (34), the centre of the gas collector (12) and the centre of the sintered compact (30) are in one and the same horizontal plane (50).

12. A cover (10) according to any one of the preceding claims, **characterised in that** the gas collector (12) is straight and connects caps (16) fitted in the cover (10), the gas collector (12) extending as far as the two opposing walls (18, 20) of the cover (10) and leading each time into an intermediate chamber (32, 32a) comprising a passage orifice (34) for passage of gases into a lateral channel (24, 24a).

13. A battery comprising a cover (10) according to any one of the preceding claims.

## Patentansprüche

1. Batteriedeckel (10) aufweisend:
mindestens einen in dem Deckel (10) eingebauten Gaskollektor (12) zur Herstellung einer Verbindung mit dem Inneren wenigstens einer Zelle eines Batteriekastens, wobei sich der Gaskollektor bis zu einer der Seitenwände (18, 20) des Deckels (10) erstreckt;
eine Vertiefung (22) in der Seitenwand (18);
eine die Vertiefung (22) abdeckende Platte (26), wobei die Platte mit einer Entlüftungsöffnung (28) versehen ist; und
einen Sinterkörper (30), der in der Vertiefung (22) sitzt und so angeordnet ist, dass alle Gase durch den Sinterkörper (30) hindurch und anschließend durch die Entlüftungsöffnung (28) nach außen strömen,
**dadurch gekennzeichnet,**
**dass** die Entlüftungsöffnung (28) eine obere Innenfläche und eine untere Innenfläche aufweist,
**dass** der Abstand zwischen oberer und unterer Innenfläche kleiner oder gleich 1,0 mm ist,
und **dass** das Verhältnis der Gesamtnutzfläche der Entlüftungsöffnung (28) (durch welche das Gas strömt) zum Abstand zwischen oberer und unterer Fläche der Entlüftungsöffnung (28) zwischen 2 und 5 liegt.

2. Deckel (10) nach Anspruch 1, **dadurch gekennzeichnet, dass** der Abstand zwischen oberer und unterer Innenfläche kleiner oder gleich 1,0 mm ist, und dass das Verhältnis der Gesamtnutzfläche der Entlüftungsöffnung (28) zum Abstand zwischen oberer und unterer Fläche der Entlüftungsöffnung (28) zwischen 2,5 und 4 liegt.

3. Deckel (10) nach Anspruch 1 oder 2, **dadurch gekennzeichnet, dass** die Länge der Entlüftungsöffnung (28) (Abstand zwischen Ein- und Auslass) das 6- bis 15-fache und vorzugsweise das 8- bis 12-fache des Abstandes zwischen oberer und unterer Innenfläche der Entlüftungsöffnung (28) beträgt.

4. Deckel (10) nach Anspruch 1, 2 oder 3, **dadurch gekennzeichnet, dass** die Vertiefung (22) zum Gaskollektor (12) seitlich versetzt ist, und dass ein in der Seitenwand (18) angeordneter Seitenkanal (24) den Gaskollektor (12) mit der Vertiefung (22) verbindet.

5. Deckel (10) nach einem der Ansprüche 1 bis 4, **gekennzeichnet durch** eine im Seitenkanal (24) liegende Zwischenkammer (32), in welche der Gaskollektor (12) einmündet, wobei der Boden der Zwischenkammer (32) als Elektrolytkollektor dient, und eine Durchtrittsöffnung (34) in einer Wand der Zwischenkammer (32) für das Einströmen der Gase in den Seitenkanal (24).

6. Deckel (10) nach einem der Ansprüche 1 bis 5, **dadurch gekennzeichnet, dass** die Zwischenkammer (32) weitgehend quaderförmig ausgebildet ist, wobei der Gaskollektor (12) in den oberen Abschnitt der Zwischenkammer (32) einmündet und die Durchtrittsöffnung (34) ein im Wesentlichen horizontaler Schlitz (44) ist, welcher sich in mindestens einer der Kammerwände (18, 20) unmittelbar unter einer oberen Kante befindet.

7. Deckel (10) nach einem der Ansprüche 1 bis 6, **dadurch gekennzeichnet, dass** die Wände (18, 20) der Zwischenkammer (32) so über den unteren Rand des Gaskollektors (12) hinaus reichen, dass der Elektrolytrücklauf ins Innere der Batterie begünstigt wird.

8. Deckel (10) nach einem der Ansprüche 1 bis 7, **gekennzeichnet durch** zwei weitgehend vertikale Zwischenwände (40, 42), die jeweils in unterschiedlicher Höhe mit einem im Wesentlichen horizontalen Schlitz (44) versehen sind, wobei die vertikalen Zwischenwände (40, 42) im Seitenkanal (24) nach der Zwischenkammer (32) angeordnet sind.

9. Deckel (10) nach irgendeinem der vorhergehenden Ansprüche, **dadurch gekennzeichnet, dass** die Platte (26) einen in die Vertiefung (22) hineinragenden Sinterkörperträger (45) aufweist, wobei der Sinterkörper (30) weitgehend vertikal in diesem Sinterkörperträger (45) sitzt, und dass die Entlüftungsöffnung (28) vor dem Sinterkörperträger (45) liegt.

10. Deckel (10) nach irgendeinem der vorhergehenden Ansprüche, **dadurch gekennzeichnet, dass** der Seitenkanal (24) durch eine von der Platte (26) abgedeckte Nut in der Seitenwand des Deckels gebildet ist.

11. Deckel (10) nach irgendeinem der vorhergehenden Ansprüche, **dadurch gekennzeichnet, dass** der untere Bereich der Durchtrittsöffnung (34), der Mittelpunkt des Gaskollektors (12) und der Mittelpunkt des Sinterkörpers (30) in der gleichen horizontalen Ebene (50) liegen.

12. Deckel (10) nach irgendeinem der vorhergehenden Ansprüche, **dadurch gekennzeichnet, dass** der Gaskollektor (12) geradlinig ausgebildet ist und im Deckel (10) angebrachte Stopfen (16) verbindet, wobei sich der Gaskollektor (12) bis zu zwei gegenüberliegenden Wänden (18, 20) des Deckels (10) erstreckt und jeweils in eine Zwischenkammer (32, 32a) einmündet, die eine Durchtrittsöffnung (34) für das Einströmen der Gase in einen Seitenkanal (24, 24a) aufweist.

13. Batterie mit einem Deckel (10) nach irgendeinem der vorhergehenden Ansprüche.
